## Europäisches Patentamt

## European Patent Office

## Office européen des brevets

(19)

(11) Veröffentlichungsnummer: **0 175 128**
**B1**

(12)

# EUROPÄISCHE PATENTSCHRIFT

(45) Veröffentlichungstag der Patentschrift:
**28.12.88**

(21) Anmeldenummer: **85109960.6**

(22) Anmeldetag: **07.08.85**

(51) Int. Cl.⁴: **D 21 B 1/32,** D 21 B 1/02

(54) Verfahren und Anordnung zur Papierstoffaufbereitung.

(30) Priorität: **30.08.84  CH 4149/84**

(43) Veröffentlichungstag der Anmeldung:
**26.03.86 Patentblatt 86/13**

(45) Bekanntmachung des Hinweises auf die Patenterteilung:
**28.12.88 Patentblatt 88/52**

(84) Benannte Vertragsstaaten:
**AT DE FR GB IT NL SE**

(56) Entgegenhaltungen:
**EP-A- 0 028 658**
**WO-A-82/04449**
**DE-A- 2 433 324**
**DE-B- 2 339 591**
**DE-C- 405 356**
**FR-A- 2 417 580**
**GB-A- 2 034 200**
**US-A- 1 875 045**

(73) Patentinhaber: **SULZER-ESCHER WYSS GMBH, Escher Wyss-Strasse 25 Postfach 1380, D-7980 Ravensburg (DE)**

(72) Erfinder: **Krebs, Jochen, Dipl.-Ing., Hochbergstrasse 37, D-7980 Ravensburg (DE)**
Erfinder: **Siewert, Wolfgang, Dr. Ing., Weinbergweg 30, D-7981 Weingartshof (DE)**
Erfinder: **Matzke, Wolfgang, Dr. Ing., Max-Regerstrasse 28, D-7981 Berg (DE)**
Erfinder: **Holik, Herbert, Dipl.-Ing., Montélimarstrasse 18, D-7980 Ravensburg (DE)**

## Beschreibung

Die Erfindung betrifft ein Verfahren zur Papierstoffaufarbeitung mit Auflösung des angelieferten Ausgangsmaterials zu Fasern und Entfernung von Fremdstoffen vor der Stapelung, wobei vor der Auflösung das Ausgangsmaterial bei hohem Feststoffgehalt vereinzelt wird, und die im Ausgangsmaterial enthaltenen Fremdstoffe aussortiert werden, sowie eine Anordnung zur Durchführung des Verfahrens.

Verfahren und Anordnungen zur Papierstoffaufarbeitung sind beispielsweise aus den vom Güntter-Staib-Verlag, Biberach, publizierten Vorträgen des PTS-Deinking-Symposiums 1981 des Papiertechnischen Institutes in München, insbesondere durch den Vortrag von H. Ortner und P. Schweiss, Seiten 87–91, «Neue Flotations-Deinking-Verfahren und -Maschinen» bekannt. Sie dienen vorzugsweise der Verarbeitung von Altpapier, wobei anschliessend zum Beispiel eine Prozessstufe zum Deinken von Druckfarben des zerfaserten und von Fremdstoffen befreiten Ausgangsmaterials folgt. Mit geeigneten Anpassungen ist jedoch auch die Verwendung von nativen Rohstoffen, z.B. eine Zellstoffverarbeitung möglich.

Aus der DE-OS 24 33 324 ist ein Verfahren zur Gewinnung von Altpapier bekannt, bei dem das Ausgangsmaterial nur bis zu einem noch nicht pumpfähigen Zustand angefeuchtet wird, z.B. auf einen Feststoffgehalt von 40–60%, um Fremdstoffe und Papierkomponenten leicht trennen zu können. Anschliessend wird das Altpapier zu Ballen verarbeitet oder einer Nassaufbereitung in einem niedrigen Stoffdichtebereich, z.B. bei 5% zugeführt.

Bei derartigen Verfahren wird das Altpapier unter Zusatz von Wasser, Dampf und gegebenenfalls geeigneten Chemikalien in einem Pulper aufgelöst. Dabei wird vorzugsweise soviel Wasser beigegeben, dass im Dünnstoffbereich gearbeitet wird. Darunter ist ein Bereich mit einem Feststoffgehalt in der Grössenordnung von etwa 5% zu verstehen. In der Praxis sind Feststoffdichten von 3–7% im Pulper üblich. Anschliessend erfolgt, gegebenenfalls nach Zwischenlagerung in einer Bütte, eine Sortierung des Materials, beispielsweise mit geeigneten Sieben, wobei Fremdstoffe wie Unrat in der Form von Metall, Glas, Steinen, Kunststoffen etc. abgetrennt werden. Anschliessend wird das Material mit geeigneten Eindickern entwässert und im Dickstoffbereich in einem Stapelturm, gegebenenfalls nach Zusatz von Chemikalien gelagert. Unter dem Dickstoffbereich versteht man dabei einen Feststoffgehalt in der Grössenordnung von etwa 15%. In der Praxis liegen die verwendeten Feststoffgehalte in der Regel zwischen 10 und 20%. Anschliessend erfolgt die Weiterverarbeitung, im Falle von Altpapieraufbereitungen z.B. in der Form einer Entstippung und einem Deinkingsystem.

Die Verwendung eines im Dünnstoffbereich arbeitenden Pulpers hat bei dem beschriebenen Verfahren bestimmte Vorteile, insbesondere die leichte Erreichbarkeit einer gleichmässigen Eintragsstoffdichte, sowie die leichte Pumpfähigkeit der Suspension. Nachteilig ist jedoch, dass der Aufwand für die Verdünnung und Zwischeneindickung erheblich und das Verfahren somit nicht optimal wirtschaftlich ist.

Es sind aber auch bereits Pulper bekannt, die im Dickstoffbereich um 15% Feststoffgehalt arbeiten können, vgl. die Publikation von W. Siewert: «Die Auflösetechnologie im Stoffdichtebereich um 15% und ihre Ergebnisse» in der Zeitschrift «Das Papier» 38(1984), Seiten 313–319. Die Abtrennung der in den Pulper gelangenden Fremdstoffe war bei diesen Feststoffkonzentrationen jedoch problematisch, so dass in der genannten Publikation eine Verdünnung auf etwa 6% Feststoffgehalt vor der Sortierung empfohlen wurde. Dies hatte zur Folge, dass bei der Verarbeitung stark verunreinigter Ausgangsmaterialien, die z.B. bei der Altpapierverarbeitung vorkommen, auch bei Arbeiten des Pulpers im Dickstoffbereich eine Verdünnung und Wiedereindickung erforderlich war.

Auch in der DE-PS 32 00 893 ist ein Dickstoff-Pulper beschrieben, nach dem jedoch auch hier eine Verdünnung vorgesehen ist.

Bei Deinkingprozessen werden im Pulper Chemikalien eingesetzt. Bei Verwendung von Pulpern mit erhöhter Konzentration sind auch die Chemikalien wegen der geringeren Verdünnung aktiver. Die nachfolgende Verdünnungsstufe beeinträchtigt deshalb bei derartigen Prozessen auch die Einwirkung dieser Chemikalien durch Verkürzung der Zeit, in der sie konzentriert wirksam sein können.

Die Erfindung setzt sich die Aufgabe, die genannten Nachteile des Standes der Technik zu beseitigen und insbesondere ein Verfahren und eine Anordnung zur Papierstoffaufarbeitung anzugeben, bei welcher durchgehend im Dickstoffbereich gearbeitet werden kann und eine Verdünnung und Wiedereindickung vermieden wird, so dass die Wirtschaftlichkeit verbessert ist.

Das erfindungsgemässe Verfahren ist dadurch gekennzeichnet, dass das von Fremdstoffen weitgehend befreite Material im Dickstoffbereich zu Einzelfasern aufgelöst wird, und dass anschliessend das zu Einzelfasern aufgelöste Material unter Beibehaltung des Dickstoffbereiches zur Zwischenlagerung bzw. Stapelung weitergeleitet wird.

Die erfindungsgemässe Anordnung ist gekennzeichnet durch einen der bei hohem Feststoffgehalt arbeitenden Lagen-Vereinzelungseinrichtung und/oder einer nachfolgenden Einrichtung zur Zerkleinerung zu siebbarer Grösse, sowie einer nachfolgenden Sortiereinrichtung, nachgeschalteten im Dickstoffbereich arbeitenden Pulper zur Zerlegung des Materials in Einzelfasern und einen Stapelturm zur Aufnahme des im wesentlichen unverdünnten und uneingedickten zerfaserten Materials des Pulpers. Gegebenenfalls kann eine Befeuchtungs- und Stapelungseinrichtung, um das Papier einzuweichen, zwischengeschaltet sein.

Erfindungsgemäss erfolgt also die Abtrennung von Fremdstoffen bereits im ersten Verfahrensschritt vor der Zerfaserung, wobei das Ausgangsmaterial bereits vor Eingabe in den Pulper so weit sortiert wird, dass Fremdstoffe, z.B. Metall, Glas, Steine oder Kunststoffteile in dem Masse entfernt werden, dass eine Verarbeitung im Pulper im Dickstoffbereich ohne die Gefahr von Störungen möglich ist, so dass das zerfaserte Material direkt und ohne Zwischenschaltung einer Verdünnungs-, Sortier- und Wiedereindickungsstufe in die anschliessende Prozessstufe übergeführt werden kann.

Das erfindungsgemässe Verfahren sowie Anordnungen zur Durchführung des Verfahrens werden beispielsweise anhand der in den Figuren dargestellten Diagramme und Figuren beschrieben.

Figur 1 zeigt das Ablaufschema eines erfindungsgemässen Verfahrens,

Figur 2 zeigt in schematischer Form ein Beispiel einer Papierstoffaufbereitungsanlage,

Fig. 3–6 zeigen verschiedene Beispiele von für das erfindungsgemässe Verfahren geeigneten Vereinzelungs- und Sortiereinrichtungen.

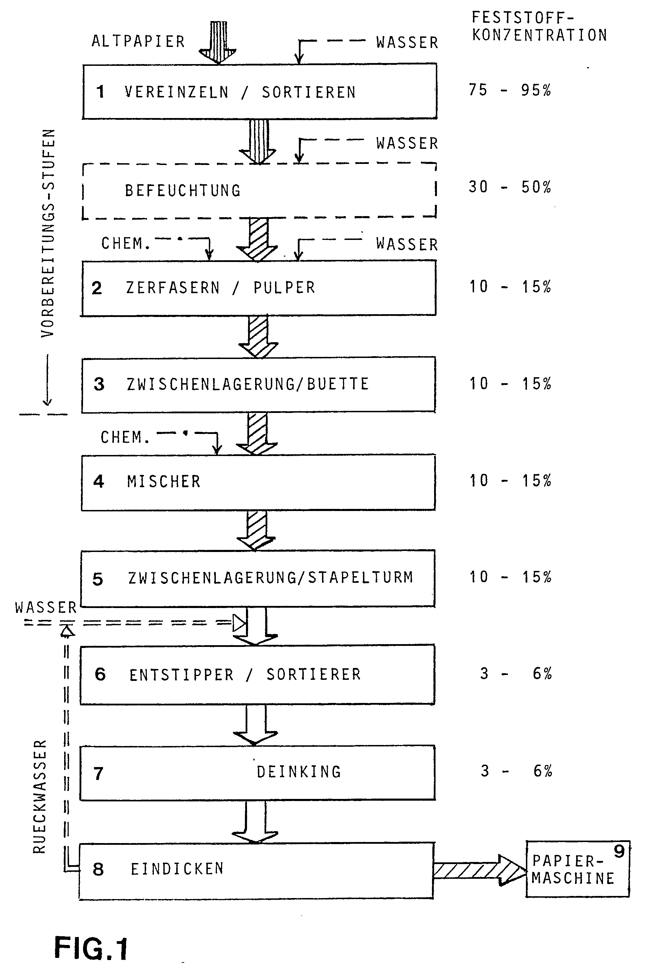

Figur 1 zeigt das Diagramm eines Papierstoffaufbereitungsverfahrens für ein Beispiel der Wiederaufbereitung von Altpapier. Bei diesem Verfahren wird das meist in Ballen angelieferte Altpapier einer Vereinzelungs- und Sortierstufe 1 zugeführt, welche so konstruiert ist, dass die Altpapierballen mechanisch in einzelne Schichten aufgetrennt werden und die im Altpapier enthaltenen Fremdstoffe für eine Sortierung vorbereitet werden. Dabei kann je nach Art des angelieferten Altpapiers fast ohne oder mit nur wenig Wasserzugabe gearbeitet werden, so dass in einem Bereich der Feststoffkonzentration über 30% vorzugsweise zwischen etwa 75 und 95% gearbeitet wird. Die im Material enthaltenen Fremdstoffe wie Metallteile, Glasscherben, Steine sowie Plastikteile werden in dieser Stufe durch geeignete Einrichtungen ausgesondert und von den Papierlagen abgetrennt.

Anschliessend wird das von Fremdstoffen weitgehend befreite Material gegebenenfalls benetzt und nach entsprechender Einweichdauer unter Zugabe von Wasser einem Pulper 2 zugeleitet. Die Benetzungsmenge wird z.B. durch eine Wiegeeinrichtung in Abhängigkeit von der Papierstoffmenge eingestellt. Dabei wird so viel Wasser beigegeben, dass die Feststoffkonzentration im Pulper im Dickstoffbereich liegt, d.h. im Bereich zwischen etwa 10 und 20%, vorzugsweise zwischen 12 und 15%. In diesem Pulper wird das Papier durch mechanische Beanspruchung, beispielsweise mittels einer rotierenden, walzenförmigen Schneckenwendel fast vollständig in einzelne Papierfasern aufgelöst. Da das zerfaserte Material nur noch einen sehr geringen Fremdstoffgehalt aufweist, kann es anschliessend sofort ohne weitere Verdünnung, d.h. unter Beibehaltung des Dickstoffbereiches in eine der Zwischenlagerung dienende Bütte 3 entleert werden.

Auch im Falle der Verarbeitung anderer Ausgangsmaterialien, beispielsweise von Zellstoff, bleiben die genannten Verfahrensschritte im wesentlichen gleich, wobei jedoch entsprechende Anpassungen an das Ausgangsmaterial vorzunehmen sind, beispielsweise bei der Wahl der Sortiereinrichtung 1.

Von den bis anhin beschriebenen Vorbereitungsstufen 1–3 wird das zerfaserte Material dann aus der Bütte den Prozessstufen zugeleitet. Im Falle der Altpapieraufbereitung, bei dem Druckfarben vom Papier entfernt werden müssen, wird beispielsweise ein Teil der Chemikalien im Pulper 2 zugegeben, die dann ohne Zwischenverdünnungsstufe über den gesamten Aufbereitungsprozess reagieren können. Ein weiterer Teil wird dem zerfaserten Material in einem Mischer 4 als Deinking-Chemikalien zugesetzt. Dabei wird immer noch im Dickstoffbereich von etwa 10–15% Feststoffkonzentration gearbeitet. Das mit Chemikalien vermischte Material wird daraufhin in einem Stapelturm für bestimmte Zeit gelagert, wo eine Reaktion der Chemikalien mit den Druckfarben stattfindet. Es können aber auch alle Chemikalien an nur einer Dosierstelle zugegeben werden. Es ist in jedem Falle gewährleistet, dass sie über die ganze Zeit bis nach der Stapelung vor dem Deinkingprozess in erhöhter Konzentration einwirken können. Anschliessend wird das Material mit Wasser versetzt, so dass eine Feststoffkonzentration von ca. 3–6% eingestellt wird und anschliessend in einem Entstipper oder Sortierer 6 von noch vorhandenen Stippen gereinigt wird.

Daraufhin wird das entstippte Material einer Deinking-Einrichtung 7 zugeführt, in welcher die Farbstoffe entfernt werden. Nach Leitung der nunmehr entfärbten Fasersuspension durch eine Eindickeinrichtung, z.B. ein Entwässerungsfilter 8 wird die fertig aufbereitete Stoffsuspension der eigentlichen Papiermaschine 9 zur Weiterverarbeitung zugeführt. Dieser Ablauf kann auch ohne Zwischenschaltung der 1. Zwischenlagerung erfolgen.

Im Falle der Verarbeitung anderer Ausgangsmaterialien, beispielsweise von Zellstoff, sind die Prozessstufen und Prozessverläufe in geeigneter Weise abzuändern. Beispielsweise kann auf die Sortierung im trockenen Bereich verzichtet werden, da das Material sauber ist.

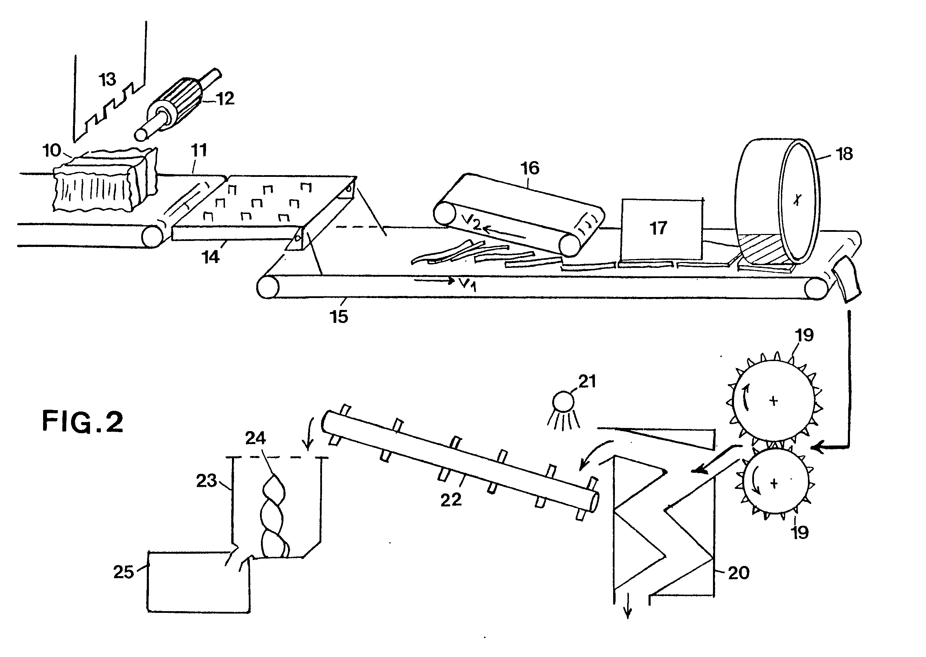

Figur 2 zeigt eine Anordnung zur Verarbeitung von Altpapier, in welcher das vorstehend beschriebene Verfahren verwendet wird. Die verschnürten Altpapierballen 10 werden auf einem Förderband 11 zugeführt, wobei z.B. die Ballendrähte mittels einer Drahtguillotine 13 aufgeschnitten und eines Ballendrahtaufwicklers 12 entfernt werden. Die geöffneten Ballen werden über eine hydraulische Ballenabkippvorrichtung 14 einem Transportband 15 zugeführt und dabei schon in ihrem Gefüge gelockert und zwischen diesem Transportband und einem Rippenband 16 hindurchgeführt. Das Transportband 15 und das Rippenband 16 sind entweder gegenläufig oder gleichläufig mit verschiedener Bandgeschwindigkeit ($v_1 \neq v_2$). Diese beiden Bänder bewirken, dass die Altpapierballen in die einzelnen Papierlagen zerlegt werden. Anschliessend ist auf dem Transportband 15 ein Magnetabscheider 17 vorgesehen, welcher magnetische Metalle vom Rest des Materials trennt. Anschliessend wird das Material über einen Unterdruckabscheider 18 zur Abtrennung von Plastikteilen und anderem luftdichten Unrat geleitet. Daraufhin durchläuft das Material ein Stachelwalzenpaar 19, mit unterschiedlicher Umfangsgeschwindigkeit. Dieses hat sowohl die Aufgabe, die Papier-Einzellagen zu knicken und zu stauchen, als auch gewisse Unratbestandteile, wie z.B. Glas mechanisch in definiert kleine Stücke zu zerkleinern. Diese sind dann über Schwerkraftabscheider 20, z.B. eine gelochte Trommel oder einen Windsichter zu entfernen. Es folgt eine Benetzungseinrichtung 21, z.B. eine Spritzdüse, die über einem Vorratsband, welches zugleich eine Einweichstrecke darstellt, oder in einer Trommel angeordnet sein kann, bevor das Material dem Pulper 23 zugeführt wird. Dieser Pulper 23 ist in geeigneter Weise zur Verarbeitung von Material im Dickstoffbereich ausgebildet und kann beispielsweise eine rotierende, walzenförmige Schneckenwendel 24 aufweisen. In diesem Pulper wird das Altpapiermaterial fast vollständig in die einzelnen Fasern zerlegt. Das aufgelöste Material gelangt daraufhin in die Bütte 25, in welcher es für die weitere Verarbeitung zwischengelagert wird.

Es sei bemerkt, dass insbesondere die Einrichtungen der 1. Verfahrensstufe, in der das Vereinzeln und Aussortieren stattfindet, auf das zu verarbeitende Material abgestimmt und entsprechend konstruiert sein müssen. Die Abscheidung ferromagnetischer Metalle erfolgt zweckmässig mit einem Magnetabscheider. Kompakte Teile wie nichtmagnetische Metalle, Steine, Flaschen, Glasscherben etc. können durch Windsichten oder gelochte Trommeln ausgeschieden werden. Auch die Adhäsionseigenschaften wasserbenetzten Papiers können zur Abtrennung von anderen Materialien ausgenutzt werden. Die Separierung von Plastikteilen kann durch Benutzung der statischen Aufladung verschiedener Kunststoffe erfolgen. Flächenhafte Kunststoffolien können durch Ausnutzung der Luftdurchlässigkeit von Papier im Gegensatz zu Plastik abgetrennt werden. Auch die geringere Reisskraft von Papierblättern im Vergleich zu Kunststoffolien kann als Unterscheidungsmerkmal dienen. Bei einfacher Trockentrennung können auch normale Schüttelsiebe oder die Ausnutzung der Schwerkraftabscheidung zur Abtrennung der Papierblätter von Fremdstoffen herangezogen werden.

In den folgenden Figuren werden einige Einrichtungen, die sich insbesondere bei der Verarbeitung von Altpapier bewährt haben, in grösserem Detail skizziert.

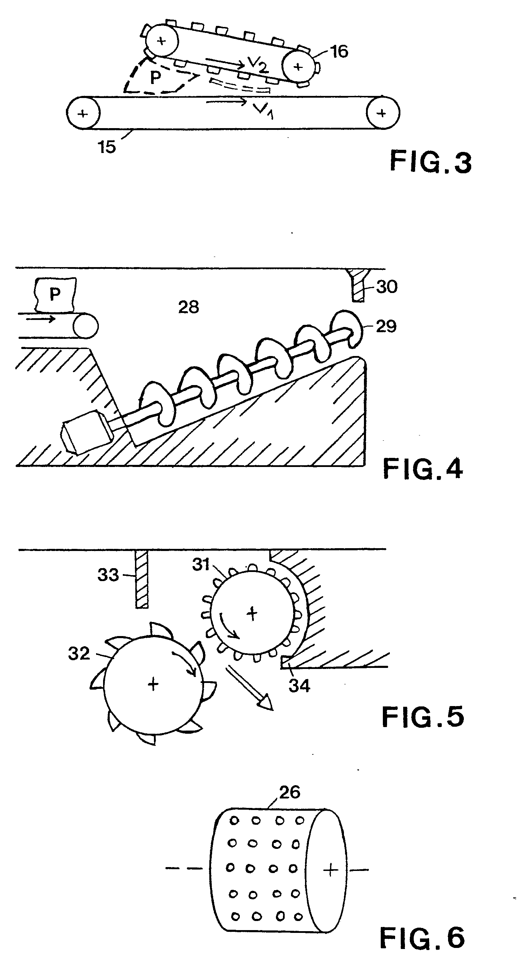

Figur 3 zeigt eine Einrichtung zur Vereinzelung der Papierblätter, die aus einem gerippten Förderband 16 besteht, welche schräg oberhalb des Transportbandes 15 angeordnet ist. Die Papierballen P durchlaufen dabei einen in Bewegungsrichtung enger werdenden Spalt und werden somit deformiert. Die Bandgeschwindigkeit des Stachelbandes 16 ist grösser gewählt als die Bandgeschwindigkeit des Transportbandes 15, so dass die einzelnen Papierblätter vom Ballen P abgezogen und vom Transportband 15 getrennt oder auch gegenläufig weiterbefördert werden.

Figur 4 zeigt eine Vereinzelungseinrichtung unter Verwendung von Schneckenwendeln. Die Altpapierballen P werden dabei einem Behälter 28 zugeführt, in welchem mehrere parallele Förderschneckenwendeln 29 schräg nach oben gerichtet, nebeneinander vorgesehen sind. Zweckmässigerweise rotieren benachbarte Förderschnecken gegensinnig, so dass das Altpapier zwischen den Förderschnecken verschoben und in Lagen vereinzelt weitertransportiert wird. Durch einen Abstreifer 30 werden grössere, noch nicht zerlegte Teile zurückgehalten und gegebenenfalls zerquetscht. Teile, die bereits klein genug sing, können dagegen den Spalt zwischen dem Oberende der Förderschnecke 29 und dem Abstreifer passieren und in die nächste Stufe gelangen. Die Schnecken können auch gleichsinnig, jedoch mit unterschiedlichen Umfangsgeschwindigkeiten betrieben werden.

Figur 5 zeigt schliesslich ein Stachelwalzenpaar, bestehend aus zwei mit unterschiedlicher Umfangsgeschwindigkeit rotierenden Stachelwalzen 31 und 32. Durch geeignete Abstreifer 33 und 34 wird auch hier erreicht, dass nur vereinzeltes Material zwischen den Walzen hindurchtreten kann, grössere Teile jedoch zurückgehalten oder zerquetscht werden.

Figur 6 zeigt einen anderen Typ von Schwerkraftabscheider. Dieser besteht aus einer gelochten Trommel 26, deren Löcher so gewählt sind, dass Feststoffe heraustreten können.

**Patentansprüche**

1. Verfahren zur Papierstoffaufbereitung mit Auflösung des angelieferten Ausgangsmaterials zu Fasern und Entfernung von Fremdstoffen vor der Stapelung, wobei vor der Auflösung das Ausgangsmaterial bei hohem Faserstoffgehalt vereinzelt wird (1) und die im Ausgangsmaterial enthaltenen Fremdstoffe aussortiert werden, dadurch gekennzeichnet, dass das von Fremdstoffen weitgehend befreite Material im Dickstoffbereich bei einer Feststoffkonzentration zwischen 10 und 20% zu Einzelfasern aufgelöst wird (2), und dass anschliessend das zu Einzelfasern aufgelöste Material unter Beibehaltung des Dickstoffbereiches zur Lagerung weitergeleitet wird (5).

2. Verfahren nach Anspruch 1, dadurch gekennzeichnet, dass nach Auflösung des Ausgangsmaterials zu Fasern (2) eine weitere Zwischenlagerung (3) im Dickstoffbereich stattfindet.

3. Verfahren nach Anspruch 1 oder 2, dadurch gekennzeichnet, dass das zu Fasern aufgelöste Material mit farbstoffablösenden Chemikalien gemischt wird (4) und anschliessend unter Beibehaltung des Dickstoffbereiches gelagert wird (5).

4. Verfahren nach Anspruch 3, dadurch gekennzeichnet, dass das gelagerte Material, gegebenenfalls nach Entstippung (6) einem Deinkingprozess (7) unterzogen wird.

5. Anordnung zur Durchführung des Verfahrens nach einem der Ansprüche 1–4, gekennzeichnet durch eine bei hohem Feststoffgehalt arbeitende Lagen-Vereinzelungseinrichtung (12, 13, 15, 16) und/oder einer nachfolgenden Zerkleinerungseinrichtung (19) zu siebbarer Grösse, durch eine nachfolgende Sortiereinrichtung (17, 18, 20) zur Abtrennung von Fremdstoffen, durch einen nachgeschalteten, im Dickstoffbereich arbeitenden Pulper (23) zur Zerlegung des Materials in Einzelfasern und durch einen Stapelturm (5) zur Aufnahme des im wesentlichen unverdünnten und uneingedickten, zerfaserten Materials des Pulpers (23).

6. Anordnung nach Anspruch 5, dadurch gekennzeichnet, dass die Lagen-Vereinzelungseinrichtung zwei mit verschiedener Bandgeschwindigkeit laufende Transportbänder (15, 16) aufweist, zwischen denen der Weg des Ausgangsmaterials hindurchläuft.

7. Anordnung nach Anspruch 5, dadurch gekennzeichnet, dass die Lagen-Vereinzelungseinrichtung aus mehreren parallel laufenden Schnecken (29) besteht.

8. Anordnung nach Anspruch 7, dadurch gekennzeichnet, dass die Schnecken unterschiedliche Umfangsgeschwindigkeiten aufweisen.

9. Anordnung nach einem der Ansprüche 5–8, dadurch gekennzeichnet, dass zur Ausscheidung schwerer Materialien ein Schwerkraftabscheider (26) vorgesehen ist.

10. Anordnung nach Anspruch 9, dadurch gekennzeichnet, dass einer der Schwerkraftabscheider eine gelochte Trommel aufweist (26).

11. Anordnung nach einem der Ansprüche 5–10, dadurch gekennzeichnet, dass zur Abscheidung luftundurchlässiger Kunststoffteile ein Unterdruckabscheider (18) vorgesehen ist.

12. Anordnung nach einem der Ansprüche 5–11, dadurch gekennzeichnet, dass zur Zerkleinerung schwererer und grösserer Teile Stachelwalzen (19) vorgesehen sind.

13. Anordnung nach Anspruch 12, dadurch gekennzeichnet, dass die Stachelwalzen (19) unterschiedliche Umfangsgeschwindigkeiten aufweisen.

14. Anordnung nach Anspruch 13, dadurch gekennzeichnet, dass nach den Stachelwalzen Sprüheinrichtungen (24) zur Besprühung des Papiers vorgesehen sind.

**Revendications**

1. Procédé pour la préparation de la pâte à papier comportant la désagrégation en fibres du matériau de départ fourni et l'élimination des matières étrangères avant le stockage, le matériau de départ (1) étant éparpillé avec une forte teneur en matières solides et les matières étrangères contenues dans le matériau de départ triées et évacuées avant la désagrégation, caractérisé par le fait que le matériau, débarrassé dans une large mesure des matières étrangères, est désagrégé en fibres individuelles (2) avec une forte densité de matière, la concentration de matière solides étant comprise entre 10 et 20%, et qu'ensuite le matériel désagrégé en fibres individuelles est conduit (5) au stockage en conservant une forte densité de matière.

2. Procédé selon la revendication 1, caractérisé par le fait qu'après la désagrégation du matériau de départ en fibres (2) a lieu un autre stockage intermédiaire (3) avec une forte densité de matière.

3. Procédé selon la revendication 1 ou 2, caractérisé par le fait que le matériau désagrégé en fibres est mélangé (4) avec des produits chimiques qui décomposent les colorants et est ensuite stocké (5) en conservant une forte densité de matière.

4. Procédé selon la revendication 3, caractérisé par le fait que le matériau stocké, le cas échéant après enlèvement (6) de morceaux, est soumis à un processus de désencrage (7).

5. Dispositif pour l'exécution du procédé selon une des revendications 1 à 4, caractérisé par un dispositif de division en couches individuelles (12, 13, 15, 16) travaillant avec une forte densité de matière et/ou un dispositif de déchiquetage (19) à une dimension susceptible d'être criblée, par un dispositif successif de tri (17, 18, 20) destiné à la séparation des matières étrangères, par un pulper (23) placé à la suite, travaillant avec une forte densité de matière et destiné à désagréger le matériau en fibres individuelles, et par une tour de stockage (5) destinée à recevoir le matériau mis en fibres du pulper (23), pratiquement ni dilué ni épaissi.

6. Dispositif selon la revendication 5, caractérisé par le fait que le dispositif de division de couches présente deux bandes transporteuses (15, 16) se déplaçant avec une vitesse de bande différente, entre lesquelles passe la trajectoire du matériau de départ.

7. Dispositif selon la revendication 5, caractérisé par le fait que le dispositif de division de couches se compose de plusieurs vis sans fin (29) tournant parallèlement.

8. Dispositif selon la revendication 7, caractérisé par le fait que les vis sans fin présentent des vitesses périphériques différentes.

9. Dispositif selon une des revendications 5 à 8, caractérisé par le fait qu'il est prévu un séparateur par gravité (26) destiné à la séparation des matériaux lourds.

10. Dispositif selon la revendication 9, caractérisé par le fait qu'un des séparateurs par gravité présente un tambour percé (26).

11. Dispositif selon une des revendications 5 à 10, caractérisé par le fait que pour la séparation des pièces de matière plastique imperméables à l'air, il est prévu un séparateur à dépression (18).

12. Dispositif selon une des revendications 5 à 11, caractérisé par le fait que pour le déchiquetage des parties plus lourdes et plus importantes, il est prévu des rouleaux à pointes (19).

13. Dispositif selon la revendication 12, caractérisé par le fait que les rouleaux à pointes (19) présentent des vitesses périphériques différentes.

14. Dispositif selon la revendication 13, carac-

5

térisé par le fait qu'après les rouleaux à pointes, il est prévu des dispositifs de pulvérisation (24) pour l'aspersion du papier.

## Claims

1. A process for processing pulp with disintegration of the starting materials supplied to fibres and removal of foreign material before stacking, the starting material being separated (1) with a high solid content before disintegration, and the foreign material contained in the starting material being sorted out, characterised in that the material which has been largely freed from foreign material is disintegrated (2) in the high consistency range into individual fibres at a solid concentration of between 10 and 20%, and that subsequently the material disintegrated into individual fibres is conveyed further for storage (5) while maintaining the high consistency range.

2. A process according to Claim 1, characterised in that after the disintegration of the starting material into fibres (2) an additional intermediate storage (3) takes place in the high consistency range.

3. A process according to Claim 1 or 2, characterised in that the material disintegrated into fibres is mixed (4) with dye-stripping chemicals and is subsequently stored (5) while maintaining the high consistency range.

4. A process according to Claim 3, characterised in that the material stored is subjected to a de-inking process (7), if necessary after defibration (6).

5. An arrangement for carrying out the process according to one of Claims 1–4, characterised by a ply separation apparatus (12, 13, 15, 16) operating at high solid content and/or a subsequent apparatus (19) for shredding to a sievable size, by a subsequent sorting apparatus (17, 18, 20) for separating off foreign material, by a subsequent pulper (23) operating in the high consistency range for breaking down the material into individual fibres and by a stacking tower (5) for receiving the substantially non-thinned and non-thickened pulped material of the pulper (23).

6. An arrangement according to Claim 5, characterised in that the ply separation apparatus has two transport belts (15, 16) running at different belt speeds, between which runs the path of the starting material.

7. An arrangement according to Claim 5, characterised in that the ply separation apparatus consists of several worms (29) running parallel.

8. An arrangement according to Claim 7, characterised in that the worms have different peripheral speeds.

9. An arrangement according to one of Claims 5–8, characterised in that a gravity separator (26) is provided for separating off heavy materials.

10. An arrangement according to Claim 9, characterised in that one of the gravity separators has a perforated drum (26).

11. An arrangement according to one of Claims 5–10, characterised in that a low pressure separator (18) is provided for separating off pieces of plastic which are impervious to air.

12. An arrangement according to one of Claims 5–11, characterised in that spiked rollers (19) are provided for crushing heavy and larger components.

13. An arrangement according to Claim 12, characterised in that the spiked rollers (19) have different peripheral speeds.

14. An arrangement according to Claim 13, characterised in that spraying devices (24) are provided after the spiked rollers for spraying the paper.

FESTSTOFF-
KONZENTRATION

ALTPAPIER — — — WASSER

| 1 VEREINZELN / SORTIEREN | 75 - 95% |

— — — WASSER

| BEFEUCHTUNG | 30 - 50% |

CHEM. — — — WASSER

| 2 ZERFASERN / PULPER | 10 - 15% |

| 3 ZWISCHENLAGERUNG/BUETTE | 10 - 15% |

CHEM.

| 4 MISCHER | 10 - 15% |

| 5 ZWISCHENLAGERUNG/STAPELTURM | 10 - 15% |

WASSER

| 6 ENTSTIPPER / SORTIERER | 3 - 6% |

| 7 DEINKING | 3 - 6% |

RUECKWASSER

| 8 EINDICKEN | PAPIER-MASCHINE 9 |

VORBEREITUNGS-STUFEN

## FIG.1

FIG.2

FIG.3

FIG.4

FIG.5

FIG.6